# EUROPÄISCHE PATENTSCHRIFT

(11) **EP 1 886 907 B1**
(45) Veröffentlichungstag und Bekanntmachung des Hinweises auf die Patenterteilung: **18.02.2009**
(21) Anmeldenummer: 07013557.9
(22) Anmeldetag: 11.07.2007
(51) Int. Cl.: B62J 15/00, B62J 17/02

(54) **Motorrad mit Verkleidungselement**
Motorcycle with cowling structure
Motocyclette avec carénage

(30) Priorität: 10.08.2006 DE 102006037457
(43) Veröffentlichungstag der Anmeldung: 13.02.2008
(73) Patentinhaber: Bayerische Motoren Werke Aktiengesellschaft, 80809 München (DE)
(72) Erfinder: Buckan, Alexander, 82194 Gröbenzell (DE)

(56) Entgegenhaltungen:
- EP-A- 0 754 615
- EP-A- 1 612 131
- US-A- 4 066 290

## Beschreibung

Die vorliegende Erfindung betrifft ein Motorrad gemäß dem Oberbegriff des Anspruches 1.

Bei manchen Motorrädern ist das vordere "Schutzblech", das im Folgenden als "Kotflügel" bezeichnet wird, aus mehreren einzelnen Kotflügelelementen zusammengesetzt. Um bei einem mehrteiligen Kotflügel, in einer Seitenansicht des Motorrads gesehen, eine filigrane Seitenansicht zu erhalten, darf der Kotflügel nicht zu "dick" gestaltet werden. Je dünner der Kotflügel gestaltet ist, desto größer ist seine Neigung, bei höheren Geschwindigkeiten im Fahrtwind zu flattern. Bei Geländemotorrädern besteht zudem die Gefahr, dass der Kotflügel bei starker Verschmutzung aufgrund des dann höheren Gewichts im Betrieb wegknickt. Um dies zu vermeiden, sind die Kotflügel mancher Motorräder mit einem zusätzlichen Stabilisator verstärkt. Ein derartiger Stabilisator stellt ein zusätzliches Bauteil dar, was mit zusätzlichen Kosten verbunden ist und auch das Design eines Motorrads nicht unbedingt verbessert.

Aufgabe der Erfindung ist es, ein Motorrad zu schaffen, dessen vorderer Kotflügel kostengünstig und hinsichtlich seines Designs ansprechend gestaltbar ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Motorrad (siehe z.B. EP-A-1 612 131), insbesondere ein Geländemotorrad, mit einem Verkleidungselement, das einen oberen Bauteilbereich aufweist, der im Bereich vorderhalb des Lenkers des Motorrads angeordnet ist. Bei dem "oberen Bauteilbereich" des Verkleidungselements kann es sich um einen Teil der Verkleidung handeln, der bei einem herkömmlichen Motorrad den Frontscheinwerfer umgibt bzw. umschließt. Bei einem Motorrad, das im Rennbetrieb eingesetzt wird, kann es sich hierbei um ein Verkleidungselement handeln, an dem im Rennen üblicherweise die Startnummer des Motorrads angebracht ist. Das Motorrad weist ferner einen vorderen Kotflügel auf, der sich über einen Teilumfang eines Vorderrads des Motorrads erstreckt.

Der Kern der Erfindung besteht darin, dass das Verkleidungselement einen unteren Bauteilbereich aufweist, der einen ersten Teil des Kotflügels bildet, und dass ein separates, mit dem Verkleidungselement verbundenes Kotflügelelement vorgesehen ist, das einen zweiten Teil des Kotflügels bildet. Durch die Verbindung des Kotflügelelements mit dem Verkleidungselement ergibt sich eine vergleichsweise hohe Steifigkeit des Kotflügels, wodurch sich seine Flatterneigung bei höheren Geschwindigkeiten verringert.

Vorzugsweise bildet das Kotflügelelement einen, in Fahrtrichtung des Motorrads gesehen, vorderen bzw. mittleren Teil des Kotflügels. Der untere Bauteilbereich des Verkleidungselements kann einen mittleren und einen hinteren bzw. unteren Teil des Kotflügels bilden.

Vorzugsweise sind das Kotflügelelement und der damit verbundene untere Bauteilbereich so gestaltet, dass sich einerseits ein ansprechendes Design und andererseits eine hinreichend hohe Steifigkeit des gesamten Kotflügels ergibt. Beispielsweise kann vorgesehen sein, dass, in einer Draufsicht auf den Kotflügel gesehen, der untere Bereich des Verkleidungselements sich nach vorne, d. h. in Fahrtrichtung des Motorrads gesehen, pfeilartig verjüngt und dass der hintere Bereich des sich daran anschließenden Kotflügelelements eine entsprechend gestaltete pfeilartige Ausnehmung aufweist. Die pfeilartige Ausnehmung "teilt" den hinteren Bereich des Kotflügelelements in eine hintere linke und eine hintere rechte Kotflügelwange.

Zur Verbesserung der Steifigkeit des Kotflügels kann vorgesehen sein, dass der untere Bereich des Verkleidungselements eine linke und eine rechte Auf- bzw. Anlagefläche aufweist, auf bzw. an der die linke bzw. rechte Kotflügelwange des Kotflügelelements flächig auf- bzw. anliegt.

Alternativ oder ergänzend dazu kann der untere Bereich des Verkleidungselements in Sandwichbauweise, Wabenbauweise o.ä. ausgeführt sein und/oder mit Versteifungsrippen bzw. Streben versehen sein, um die Steifigkeit des Verkleidungselements bei geringem Bauteilgewicht zu optimieren. Die Steifigkeit des unteren Bereichs des Verkleidungselements kann auch dadurch erhöht werden, dass dieser Bereich als "Hohlbauteil" mit einem, im Querschnitt gesehen, geschlossenem Hohlprofil ausgeführt wird, was später noch näher erläutert wird.

Das Kotflügelelement kann im Bereich seiner Kotflügelwangen mit dem Verkleidungselement verbunden sein. Die beiden Komponenten können beispielsweise miteinander verschraubt, verclipst, verklebt, verschweißt und/oder formschlüssig miteinander verbunden sein. Prinzipiell sind eine Vielzahl von Verbindungstechnologien denkbar.

Nach einer Weiterbildung der Erfindung ist der vordere Kotflügel so gestaltet und angeordnet, dass er sich harmonisch in das Gesamtdesign des Motorrads einfügt. Vorzugsweise ist der Kotflügel so gestaltet und angeordnet, dass, in einer Seitenansicht des Motorrads gesehen, die obere Konturlinie des vorderhalb der Gabel befindlichen Kotflügelabschnitts sich glatt an die hinterhalb der Gabel bzw. des Lenkers vorhandene obere Konturlinie anschließt, die durch die Oberseite der Sitzbank und/oder des bei manchen Motorrädern vorderhalb der Sitzbank angeordneten Kraftstofftanks gebildet ist.

Im Folgenden wird die Erfindung im Zusammenhang mit der Zeichnung näher erläutert. Es zeigen:
- Figur 1: ein Motorrad mit erfindungswesentlichen Komponenten in Seitenansicht;
- Figur 2: Schnittdarstellungen A, B, C entsprechend der in Figur 1 gezeigten Schnittlinien;
- Figur 3: eine Explosionsdarstellung des den Kotflügel bildenden Verkleidungselements und des Kotflügelelements;
- Figur 4: die in Figur 3 gezeigten Komponenten in zusammengefügtem Zustand;
- Figur 5: eine Draufsicht auf die in Figur 4 gezeigte Kotflügelanordnung;
- Figur 6: ein Ausführungsbeispiel, bei dem der untere Bereich des Verkleidungselements im Querschnitt ein geschlossenes Hohlprofil aufweist; und
- Figur 7: ein Ausführungsbeispiel , bei dem der untere Bereich des Verkleidungselements mit zusätzlichen flügelartig gestalteten Versteifungsrippen versehen ist.

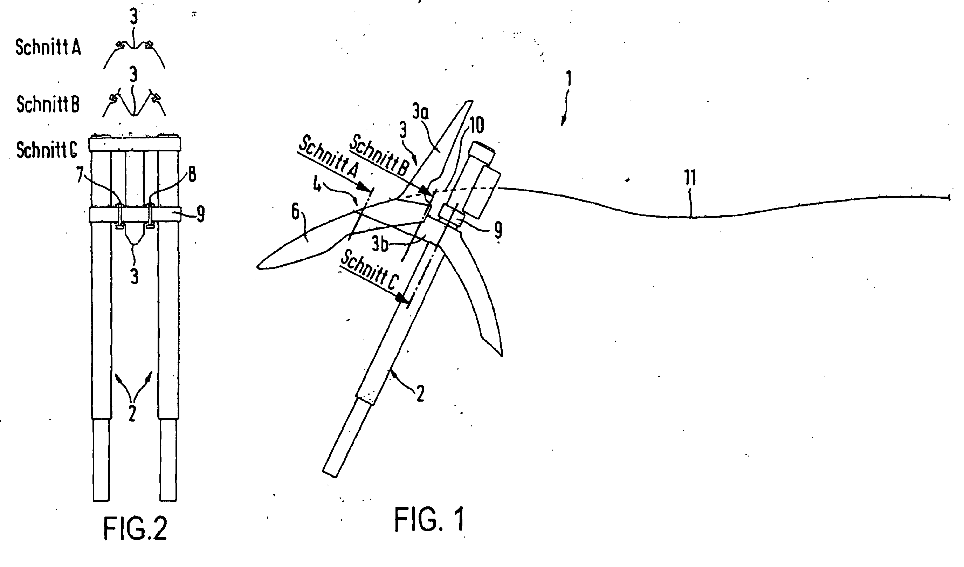

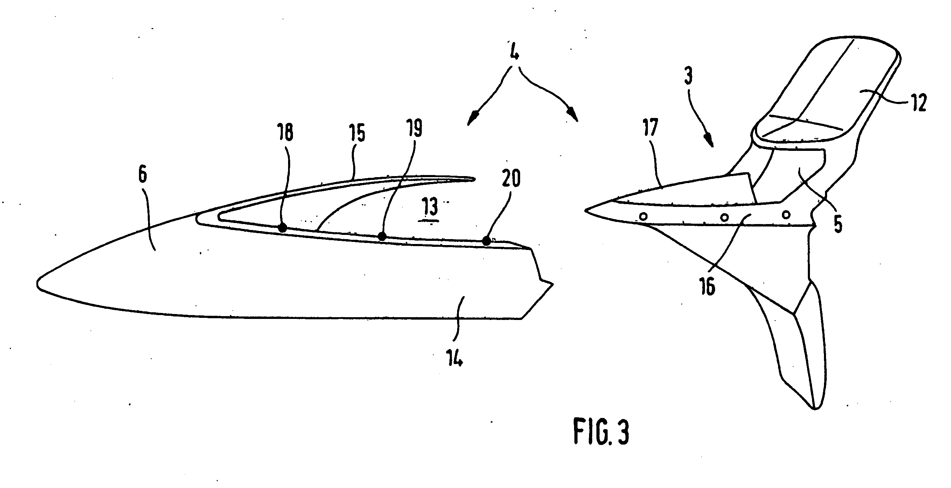

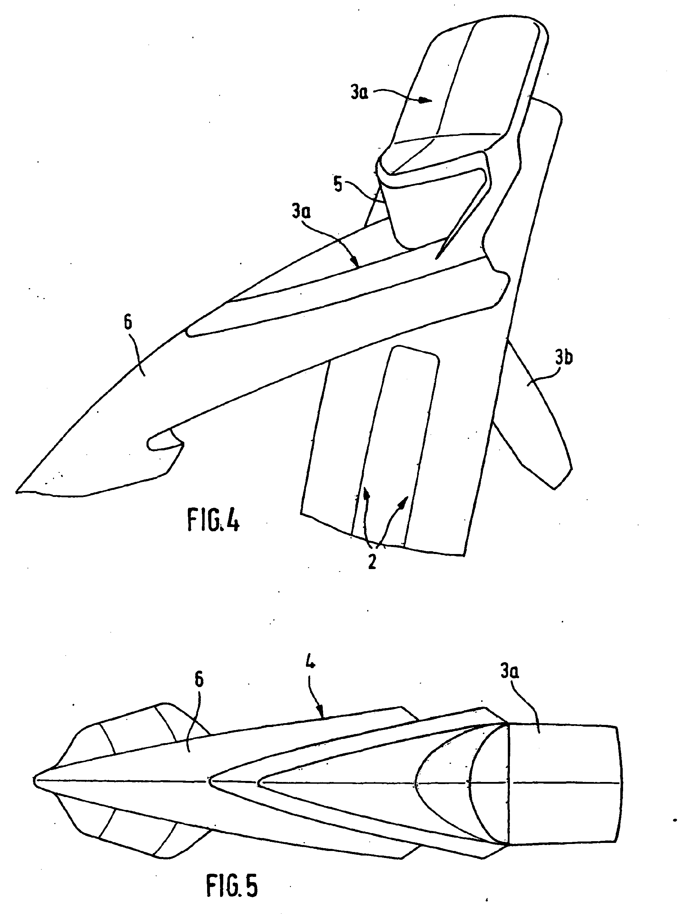

Figur 1 zeigt in schematischer Darstellung ein Motorrad 1 mit einer Vorderradgabel 2. Im oberen Bereich der Vorderradgabel 2 ist ein hier nicht näher dargestellter Lenker vorgesehen. Im Bereich der Vorderradgabel 2 bzw. vorderhalb des Lenkers ist ein Verkleidungselement 3 angeordnet, das einen oberen Bauteilbereich 3a und einen sich daran anschließenden unteren Bauteilbereich 3b aufweist, der einen mittleren bzw. hinteren, unteren Abschnitt eines Kotflügels 4 des Motorrads 1 bildet. Der obere Bauteilbereich 3a des Verkleidungselements 3 kann, was am Besten aus den Figuren 3 bzw. 4 ersichtlich ist, eine "Einfassung" für einen Frontscheinwerfer 5 (vgl. Figur 4) bilden, sowie einen sich nach oben daran anschließenden Frontspoiler.

Der vordere Teil des Kotflügels 4 ist durch ein Kotflügelelement 6 gebildet, das mit dem Verkleidungselement 3 und/oder mit der Gabel 2 verbunden sein kann. Bei dem in den Figuren 1 und 2 gezeigten Ausführungsbeispiel ist das Kotflügelelement 6 ausschließlich mit dem Verkleidungselement 3 verbunden. Wie aus Schnitt C der Figur 2 ersichtlich ist, ist das Verkleidungselement 3 mittels zweier Schrauben 7, 8 mit einer unteren Gabelbrücke 9 der Vorderradgabel 2 verschraubt.

Wie aus Figur 1 ersichtlich ist, fügt sich der vorderhalb der Gabel 2 befindliche Abschnitt des Kotflügels 4 harmonisch in das Gesamtdesign des Motorrads 1 ein. Der Kotflügel ist nämlich so angeordnet, dass, in der in Figur 1 gezeigten Seitenansicht des Motorrads 1 gesehen, die durch den Kotflügel 4 im Bereich vorderhalb der Vorderradgabel 2 definierte obere Konturlinie sich glatt an eine gestrichelt dargestellte Linie 10 anschließt, die eine "glatte Verlängerung" der durch eine hier nicht näher dargestellte Sitzbank des Motorrads definierte obere Konturlinie 11 darstellt.

Figur 3 zeigt eine Explosionsdarstellung der beiden den Kotflügel 4 bildenden Komponenten. Deutlich ersichtlich ist, dass das Verkleidungselement 3 in seinem oberen Bereich 3a eine Einfassung für den Frontscheinwerfer 5 des Motorrads bildet sowie einen sich nach oben daran anschließenden relativ kleinen Frontspoiler 12. Der untere Bereich des Verkleidungselements 3 bildet Teilabschnitte des Kotflügels 4. Der untere vordere Bereich des Verkleidungselements 3 läuft, wie aus Figur 3 ersichtlich ist, pfeilartig zusammen und weist, wie aus Figur 3 sowie aus den Schnittdarstellungen der Figur 2 ersichtlich ist, ein Wellenprofil auf, was diesem Abschnitt des Kotflügels 4 eine hinreichende Steifigkeit verleiht. Einstückig mit diesem Bereich verbunden ist ein hinterer unterer Abschnitt des Verkleidungselements 3. Dieser hintere untere Abschnitt kann farblich und hinsichtlich seiner Oberflächenbeschaffenheit gegenüber dem vorderen unteren Bereich des Verkleidungselements abgesetzt sein. Beispielsweise kann der vordere untere Bereich in der Farbe der übrigen Verkleidung bzw. des vorderen Kotflügelelements 6 lackiert sein und der hintere untere Bereich des Verkleidungselements 3 kann beispielsweise in schwarzer Farbe oder in einer anderen sich vom übrigen Kotflügel abhebenden Farbe gestaltet sein.

Wie aus Figur 3 ersichtlich ist, weist das Kotflügelelement 6 in seinem hinteren Bereich eine pfeilartige Ausnehmung 13 auf, die komplementär in Bezug auf die "Pfeilform" des vorderen unteren Bereichs des Verkleidungselements 3 gestaltet ist. Die pfeilartige Ausnehmung 13 "teilt" das Kotflügelelement 6 in eine hintere linke Kotflügelwange 14 und eine hintere rechte Kotflügelwange 15. Das Verkleidungselement 3 weist eine komplementär gestaltete linke bzw. rechte Anlagefläche 16, 17 auf, an denen im zusammengebauten Zustand die Innenseiten beiden Kotflügelwangen 14, 15 flächig anliegen, was dem gesamten Kotflügel eine hinreichend hohe Steifigkeit verleiht. Das Kotflügelelement 6 kann an mehreren Verbindungspunkten, von denen hier lediglich die drei Verbindungspunkte 18 - 20 dargestellt sind, mit dem Verkleidungselement 3 verbunden sein. Das Kotflügelelement 6 kann mit dem Verkleidungselement 3 verschraubt, verclipst, verschweißt, verklebt oder in sonstiger Weise verbunden sein. Vorzugsweise ist das Kotflügelelement 6 mit dem Verkleidungselement 3 derart verbunden, dass ein leichter Austausch möglich ist.

Figur 4 zeigt das Kotflügelelement 6 und das Verkleidungselement 3 in zusammengebautem Zustand.

Figur 5 zeigt eine Draufsicht auf den Kotflügel 4 der Figuren 3, 4. Deutlich zu erkennen ist, dass der untere Bereich des Verkleidungselements 3 nach vorne hin pfeilartig zusammenläuft und dass das Kotflügelelement 6 in seinem hinteren Bereich eine komplementär gestaltete pfeilartige Ausnehmung aufweist.

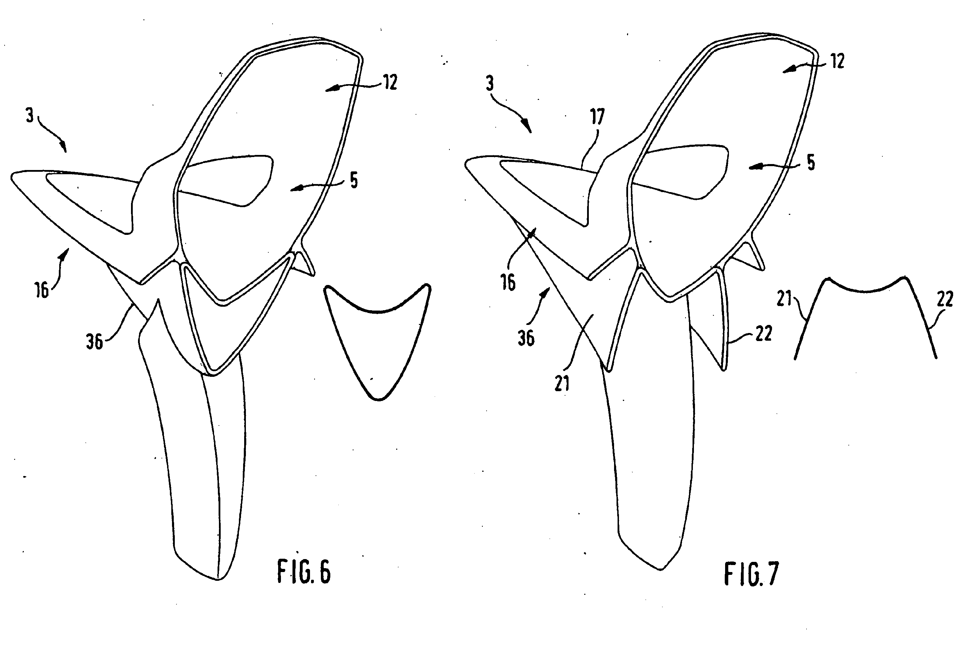

Figur 6 zeigt ein Ausführungsbeispiel, bei dem der untere Bauteilbereich 3b, oder, genauer gesagt, der vordere und mittlere Bereich des unteren Bauteilbereichs 3b als Hohlbauteil mit einem geschlossenen Hohlprofilquerschnitt ausgeführt ist. Der geschlossene Hohlprofilquerschnitt verleiht diesem Bereich ein großes Flächenträgheitsmoment und somit eine hohe Biege- und Torsionssteifigkeit. Die Außenkontur des geschlossenen Hohlprofils hat hier die Form eines Schilds bzw. eines Dreiecks, bei dem eine Seite, oder, genauer gesagt der die Oberseite des Kotflügels bildende Abschnitt des Hohlprofils, konkav eingebuchtet ist.

Figur 7 zeigt ein Ausführungsbeispiel, bei dem der untere Bauteilbereich 3b des Verkleidungselements 3 zusätzlich zu den ebenfalls versteifend wirkenden Anlageflächen 16, 17 mit zwei Versteifungsrippen bzw. "Stegen" 21, 22 versehen ist, die flügelartig schräg seitlich nach unten von dem die Oberseite des Kotflügel bildenden Abschnitts des Kotflügels abstehen. Zusammen mit dem die Oberseite des Kotflügel bildenden Abschnitt des Kotflügels bilden die flügelartigen Versteifungsrippen 21, 22 ein Querschnittsprofil, das der eines "M" ähnelt. Die beiden Versteifungsrippen bilden die beiden Seitenwangen des "M" und der die Oberseite des Kotflügels bildende konkav eingebuchtete Abschnitt den Mittelbereich des "M".

## Patentansprüche

1. Motorrad (1), insbesondere Geländemotorrad, mit
- einem Verkleidungselement (3), das einen oberen Bauteilbereich (3a) aufweist, der im Bereich vorderhalb eines Lenkers des Motorrads (1) angeordnet ist, und
- einem vorderen Kotflügel (4), der sich über einen Teilumfang des Vorderrads des Motorrads (1) erstreckt,
**dadurch gekennzeichnet, dass** das Verkleidungselement (3) einen unteren Bauteilbereich (3b) aufweist, der einen ersten Abschnitt des Kotflügels (4) bildet, und dass ein separates, mit dem Verkleidungselement (3) verbundenes Kotflügelelement (6) vorgesehen ist, das einen zweiten Abschnitt des Kotflügels (4) bildet.

2. Motorrad (1) nach Anspruch 1, **dadurch gekennzeichnet, dass** das Kotflügelelement (6) einen, in Fahrtrichtung des Motorrads (1) gesehen, vorderen und mittleren Abschnitt des Kotflügels (4) bildet.

3. Motorrad (1) nach Anspruch 1 oder 2, **dadurch gekennzeichnet, dass** der untere Bauteilbereich (3b) des Verkleidungselements (3) einen mittleren und einen hinteren Abschnitt des Kotflügels (4) bildet.

4. Motorrad (1) nach einem der Ansprüche 1 bis 3, **dadurch gekennzeichnet, dass,** in einer Draufsicht auf den Kotflügel (4) gesehen, der untere Bereich (3b) des Verkleidungselements (3) sich pfeilartig in Fahrtrichtung des Motorrads verjüngt.

5. Motorrad (1) nach Anspruch 4, **dadurch gekennzeichnet, dass,** in einer Draufsicht auf den Kotflügel (4) gesehen, das Kotflügelelement (6) in seinem hinteren Bereich eine pfeilartige Ausnehmung (13) aufweist, die komplementär in Bezug auf den sich pfeilartig verjüngenden unteren Bereich (3b) des Verkleidungselements (3) gestaltet ist, wobei die pfeilartige Ausnehmung (13) das Kotflügelelement (6) in eine hintere linke und eine hintere rechte Kotflügelwange (14, 15) teilt.

6. Motorrad (1) nach Anspruch 5, **dadurch gekennzeichnet, dass** der untere Bereich (3b) des Verkleidungselements eine linke und eine rechte Auf- bzw. Anlagefläche (16, 17) aufweist, auf bzw. an der die linke bzw. rechte Kotflügelwange (14) flächig auf- bzw. anliegt.

7. Motorrad (1) nach einem der Ansprüche 5 oder 6, **dadurch gekennzeichnet, dass** das Kotflügelelement (6) im Bereich seiner Kotflügelwangen (14, 15) mit dem Verkleidungselement (3) verbunden ist.

8. Motorrad (1) nach einem der Ansprüche 1 bis 7, **dadurch gekennzeichnet, dass** das Kotflügelelement (6) mit dem Verkleidungselement (3) verschraubt ist.

9. Motorrad (1) nach einem der Ansprüche 1 bis 8, **dadurch gekennzeichnet, dass** das Kotflügelelement (6) mit dem Verkleidungselement (3) verclipst ist.

10. Motorrad (1) nach einem der Ansprüche 1 bis 9, **dadurch gekennzeichnet, dass** der obere Bauteilbereich (3a) des Verkleidungselements 3 zumindest einen Teilumfang eines Frontscheinwerfers (5) des Motorrads (1) umschließt.

11. Motorrad (1) nach einem der Ansprüche 1 bis 10, **dadurch gekennzeichnet, dass** das Motorrad (1) eine Sitzbank aufweist, deren Oberseite derart gestaltet ist, dass, in einer Seitenansicht des Motorrads (1) gesehen, eine durch eine Oberseite des Kotflügelelements (6) und durch eine Oberseite des sich pfeilartig verjüngenden unteren Bereichs (3b) des Verkleidungselements (3) definierte Konturlinie sich im Wesentlichen glatt an eine durch die Oberseite der Sitzbank definierte Konturlinie (11) anschließt.

## Claims

1. A motorcycle (1), especially a cross-country motorcycle, with
- a covering element (3) comprising a top region (3a) disposed in the region in front of a handlebar of the motorcycle (1), and
- a front mudguard (4) which extends over part of the periphery of the front wheel of the motorcycle (1),
**characterised in that** the covering element (3) has a bottom region (3b) which forms a first portion of the mudguard (4), and a separate mudguard element (6) is connected to the covering element (3) and forms a second portion of the mudguard (4).

2. A motorcycle (1) according to claim 1, **characterised in that** the mudguard element (6), viewed in the direction of travel of the motorcycle (1), forms a front and middle portion of the mudguard (4).

3. A motorcycle (1) according to claim 1 or claim 2, **characterised in that** the bottom region (3b) of the covering element (3) forms a middle and a rear portion of the mudguard (4).

4. A motorcycle (1) according to any of claims 1 to 3, **characterised in that,** seen in plan view of the mudguard (4), the bottom region (3b) of the covering element (3) tapers like an arrow in the direction of travel of the motorcycle.

5. A motorcycle according to claim 4, **characterised in that,** seen in plan view of the mudguard (4), the mudguard element (6) in its rear region has an arrow-like recess (13) complementary in shape with the arrow-like tapering bottom region (3b) of the covering element (3), wherein the arrow-like recess (13) divides the mudguard element (6) into a rear right and a rear left cheek (14, 15).

6. A motorcycle (1) according to claim 5, **characterised in that** the bottom region (3b) of the covering element has a left and a right bearing or abutment surface (16, 17) on which the left and right cheek (14) respectively close-fittingly bears or abuts.

7. A motorcycle (1) according to claim 5 or claim 6, **characterised in that** the mudguard element (6) is connected to the covering element (3) in the region of the cheeks (14, 15).

8. A motorcycle (1) according to any of claims 1 to 7, **characterised in that** the mudguard element (6) is screwed to the covering element (3).

9. A motorcycle (1) according to any of claims 1 to 8, **characterised in that** the mudguard element (6) is clipped to the covering element (3).

10. A motorcycle (1) according to any of claims 1 to 9, **characterised in that** the top region (3a) of the covering element (3) surrounds at least part of the periphery of a front headlamp (5) of the motorcycle (1).

11. A motorcycle (1) according to any of claims 1 to 10, **characterised in that** the motorcycle (1) has a seat bench, the top of which is shaped so that, seen in side view of the motorcycle (1), a contour line defined by a top of the mudguard element (6) and by a top of the arrow-like tapering bottom region (3b) of the covering element (3) substantially smoothly adjoins a contour line (11) defined by the top of the seat bench.

## Revendications

1. Motocyclette, notamment motocyclette tout terrain comportant
- un élément d'habillage (3) ayant un composant supérieur (3a) installé dans la région en avant du guidon de la moto (1) et
- un garde-boue avant (4) qui s'étend sur une partie de la périphérie de la roue avant de la moto (1),
**caractérisée en ce que**
l'élément d'habillage (3) comporte une partie inférieure (3b) constituant un premier segment du garde-boue (4) et un élément de garde-boue (6) distinct, relié à l'élément d'habillage (3) est prévu pour former un second segment du garde-boue (4).

2. Motocyclette (1) selon la revendication 1,
**caractérisée en ce que**
l'élément de garde-boue (6) forme un segment avant et un segment médian du garde-boue (4) vu dans la direction de déplacement de la moto (1).

3. Motocyclette (1) selon les revendications 1 ou 2,
**caractérisée en ce que**
la zone inférieure (3b) de l'élément d'habillage (3) constitue un segment intermédiaire et un segment arrière du garde-boue (4).

4. Motocyclette (1) selon l'une des revendications 1 à 3,
**caractérisée en ce que**
dans une vue de dessus du garde-boue (4), la zone inférieure (3b) de l'élément d'habillage (3) va en diminuant en forme de flèche dans la direction de déplacement de la moto.

5. Motocyclette (1) selon la revendication 4,
**caractérisée en ce que**
dans une vue de dessus du garde-boue (4), l'élément de garde-boue (6) présente, dans sa zone arrière, un dégagement (13) en forme de flèche, complémentaire par rapport à la zone inférieure (3b) de l'élément d'habillage (3), allant en diminuant en forme de flèche et
le dégagement (13) en forme de flèche divise l'élément de garde-boue (6) en une joue arrière gauche et une joue arrière droite de garde-boue (14, 15).

6. Motocyclette (1) selon la revendication 5,
**caractérisée en ce que**
la zone inférieure (3b) de l'élément d'habillage comporte une surface d'appui gauche et une surface d'appui droite (16, 17) contre lesquelles la joue gauche et la joue droite (14) du garde-boue s'appuient en surface.

7. Motocyclette (1) selon l'une des revendications 5 ou 6,
**caractérisée en ce que**
l'élément de garde-boue (6) est relié à l'élément d'habillage (3) dans la région de ses joues de garde-boue (14, 15).

8. Motocyclette (1) selon l'une des revendications 1 à 7,
**caractérisée en ce que**
l'élément de garde-boue (6) est vissé à l'élément d'habillage (3).

9. Motocyclette (1) selon l'une des revendications 1 à 8,
**caractérisée en ce que**
l'élément de garde-boue (6) est clipsé à l'élément d'habillage (3).

10. Motocyclette (1) selon l'une des revendications 1 à 9,
**caractérisée en ce que**
la zone supérieure (3a) de l'élément d'habillage (3) entoure au moins en partie le projecteur frontal (5) de la moto (1).

11. Motocyclette (1) selon l'une des revendications 1 à 10,
**caractérisée en ce que**
la moto (1) comporte un siège dont le côté supérieur est formé pour qu'en vue de côté de la moto (1), la ligne de contour définie par le côté supérieur de l'élément de garde-boue (6) et par le côté supérieur de la zone inférieure (3b) de l'élément d'habillage (3) qui diminue en forme de flèche rejoint pratiquement en continu la ligne de contour (11) définie par le côté supérieur du siège.
